# EUROPÄISCHE PATENTSCHRIFT

(11) **EP 1 949 501 B1**
(45) Veröffentlichungstag und Bekanntmachung des Hinweises auf die Patenterteilung: **09.02.2011**
(21) Anmeldenummer: 06804386.8
(22) Anmeldetag: 09.11.2006
(51) Int. Cl.: H01R 4/48, H01H 71/08, H01H 1/58, H02B 1/20, H01H 9/02

(54) **SCHALTGERÄT**
SWITCHGEAR
COMMUTATEUR

(30) Priorität: 10.11.2005 AT 18432005
(43) Veröffentlichungstag der Anmeldung: 30.07.2008
(73) Patentinhaber: Eaton GmbH, 3943 Schrems (AT)
(72) Erfinder: HAMMERMAYER, Ernst, A-1210 Wien (AT); GRILLMAYER, Johannes, A-1200 Wien (AT)
(74) Vertreter: Gibler & Poth Patentanwälte OG
(86) Internationale Anmeldenummer: PCT/AT2006/000462
(87) Internationale Veröffentlichungsnummer: WO 2007/053872

(56) Entgegenhaltungen:
- EP-A- 0 978 914
- EP-A- 1 213 792
- DE-C1- 3 141 362
- DE-U- 1 932 284
- DE-U- 7 127 086
- DE-U1- 8 128 037
- FR-A- 2 579 016
- US-A- 3 304 392
- US-A- 4 928 080
- US-A- 5 739 467

## Beschreibung

Die Erfindung betrifft ein Schaltgerät, vorzugsweise Schutzschalter, insbesondere Fehlerstromscbutzschalter und/oder Leitungsschutzschalter, umfassend ein Gehäuse mit wenigstens einer Klemmöffnung und/oder wenigstens einer Klemmschrauböffnung, und mit wenigstens einer Anschlussklemme mit einem Klemmbereich zur Aufnahme wenigstens eines Anschlussleiters, vorzugsweise mit rechteckigem Querschnitt, insbesondere eines Kontakts einer Sammelschiene, wobei in der Klemmschrauböffnung ein, die Klemmschrauböffnung wenigstens bereichsweise ausfüllendes, sowie verdrchgesichertes und/oder in Richtung der Schließstellung des Klemmbereichs verschiebefestes, Verschlussstück, vorzugsweise umfassend Isolierstoff, angeordnet ist.

Es ist bekannt bei Schaltgeräten, etwa Leitungsschutzschaltern und/oder Fehlerstromschutzschaltern, unterschiedliche Anschlussklemmen bei ansonsten funktional im Wesentlichen identischen Schaltgeräten vorzusehen. Dabei kann es sich etwa um Schraubklemmen oder um federkraftbetätigte Klemmen handeln. Derartige Schaltgeräte, welche an sich idente Schaltfunktionen aufweisen, weisen jedoch bedingt durch die unterschiedlich ausgeführten Anschlussklemmen unterschiedlich ausgeführte Gehäuse auf, was zu hohen Kosten führt, etwa durch die Herstellung und das auf Lager halten unterschiedlicher Gehäuse für Schaltgeräte mit identen Schaltfunktionen.

Die US 4 928 080 A beschreibt Verschlussstücke für das Verschließen von Klemmschrauböffnungen, wobei im Bereich der Klemmschrauböffnung jeweils die Auslässe für die Lichtbogengase ausgebildet sind, welche sich bei den Schaltvorgängen bilden.

Die FR 2 579 016 A beschreibt einen elektromagnetisch gesteuerten Unterbrecher, wobei die Öffnungen der Klemmschrauben durch eine Anschlussabdeckplatte verschlossen sind.

Die DE 19 32 284 U beschreibt einen Schalter mit in offenen Kammern angeordneten Anschlussklemmen, wobei Abdeckungen aus Isolierstoff vorgesehen sind, um die Klemmschrauben vor Zugriff zu sichern.

Die DE 31 41 362 C1 beschreibt eine federbetätigte Anschlussklemme mit einer gehäusefesten Stromschiene und einem beweglichen Rahmen.

Die EP 1 213 792 A beschreibt eine bistabile elektrische Anschlussklemme, wobei ein beweglicher Käfig durch eine Feder gegen eine gehäusefeste, Platte gedrückt wird.

Die US 3 304 392 A beschreibt ein Schaltgerät mit einer Anschlussklemme, welche sowohl eine Klemmschraube als auch eine Schraubfeder aufweist Die Anschlussklemme umfasst einen gehäusefesten C-förmigen Rahmen, und ein bewegliches Joch.

Die US 5 739 467 A zeigt eine Liftklemme mit Klemmschraube.

Die DE 71 27 086 U beschreibt eine Aufnahme- und Befestigungsvorrichtung für Patronensicherungen.

Die EP 0 978 914 A beschreibt eine Plombierleiste für Schutzschaltgeräte und Reiheneinbauschalter.

Die DE 81 28 037 U1 beschreibt ein Schaltgerät mit Anschlussklemmen und Klemmschfanböffnungen, welches Mittel zum Plombieren einer Abdeckung umfasst. Aufgabe der Erfindung ist es daher ein Schaltgerät der eingangs genannten Art anzugeben, mit welchem die genannten Nachteile vermieden werden können, und bei welchem die Herstellungs- und Lagerhaltungskosten für Schaltgeräte mit unterschiedlichen Anschlussklemmen, insbesondere die gehäusebedingten Herstellungs- und Lagerhaltungskosten, gering gehalten werden können.

Erfindungsgemäß wird dies dadurch erreicht, dass das Verschlussstück einen Klemmfortsatz aufweist, welcher auf wenigstens einen Bereich der Anschlussklemme wirkt, wobei em anschlussleiterfreier Klemmbereich durch die Wirkung des Klemmfortsatzes auf die Anschlussklemme wenigstens bereichsweise offen ist.

Dadurch können Schaltgeräte mit für Schraubklemmen vorgesehen Gehäusen auch mit anderen KJemmen verwendet werden, welche einen Teil der vorhandenen Öffnungen, etwa die Klemmschrauböffnungen für deren Funktionieren nicht benötigen. Durch ein erfindungsgemäßes Verschlussstück können diese Öffnungen verschlossen werden und damit sicher und dauerhaft ein unbefugter Zugriff; sowie das Eindringen von Fremdkörpern, wie etwa Leitungsstücke, Insekten und/oder Schmutz in das Schaltgerät verhindert werden. Dadurch können bereits vorhandene Gehäuse unabhängig von der eingebauten Klemme verwendet werden, wodurch die Kosten für ein neues Gehäuse gespart werden können, welche etwa bei einem Spritzgussgehäuse, bedingt durch die Spritzgussform erheblich sein können. Weiters wird dadurch die Flexibilität erhöht, muss doch lediglich ein Gehäuse, welches für mehrere unterschiedliche Klemmen und somit Anwendungen, vorgesehen werden kann, hergestellt und auf Lager gehalten werden.

Dadurch kann ebenso gewährleistet werden, dass der Klemmbereich einen gewissen Bereich geöffnet ist, wodurch das Einführen eines Anschlussleiters, insbesondere von Kontakten einer Sammelschiene, wesentlich vereinfacht wird, bzw. die dafür notwendigen Drücke verringert werden.

In Weiterführung der Erfindung kann vorgesehen sein, dass das Verschlussstück wenigstens einen Käemmöffnungsfortsatz aufweist, welcher die wenigstens eine Klemmöffnung wenigstens bereichsweise ausfüllt. Dadurch ist der Einsatz von Gehäusen möglich welche für den Einsatz mit Schraubklemmen vorgesehen sind, wobei der bzw. ein nun nicht mehr benötigter Bereich der Klemmöffnung verdeckt und damit vor unbefugtem Zugriff gesichert werden kann. Dadurch können etwa bei Gehäusen, welche für Klemmen vorgesehen waren, welche mehr als einen Klemmbereich aufweisen, etwa ein Klemmbereich vollständig verschlossen werden, während ein weiterer Klemmbereich offen bleibt, bzw. teilweise verschlossen wird.

In Weiterführung der Erfindung vorgesehen sein, dass die Anschlussklemme wenigstens eine Feder, zum Aufbringen eines in Richtung einer Schließstellung des Klemmbereichs wirkenden Kontaktdruckes, umfasst. Dadurch können Anschlussleiter, insbesondere Sammelschienen bzw. deren Kontakte, ohne die Verwendung von Werkzeug in den Anschlussklemmen des Schaltgeräts sicher und kontaktfest angeordnet bzw. fixiert werden. Dadurch ist eine schnelle und unkomplizierte Installation insbesondere von Schaltgeräten, welche auf einer Sammelschiene angeordnet sind möglich.

Gemäß wieder einer anderen Ausführungsform der Erfindung kann vorgesehen sein, dass die Feder als Schraubfeder ausgebildet ist. Dadurch ist eine besonders einfache und kostenschonende Fertigung möglich, da Schraubenfedern als Massenware hergestellt werden und keinerlei gesonderte spezielle Behandlung bzw. besondere Herstellung notwendig ist.

In weiterer Ausgestaltung, der Erfindung kann bei einem Schaltgerät, bei welchem die Anschlussklemme ein im Schaltgerät feststehendes Klemmelement und einen im Wesentlichen rechteckigen Kasten umfasst, und das Klemmelement zwischen einem ersten Kastenbereich und einem zweiten Kastenbereich des Kastens angeordnet ist, sowie der Klemmbereich vom ersten Kastenbereich und einer ersten Klemmelementseite begrenzt ist, vorgesehen sein, dass die Feder zwischen dem zweiten Kastenbereich und einer, der ersten Klemmelementseite gegenüber angeordneten, zweiten Klemmelementseite angeordnet ist. Dadurch kann eine übliche Schraubklemme, welche auch als Liftklemme bekannt ist, ohne Umbauarbeiten bzw. geänderter Konstruktion eingesetzt werden, wodurch sowohl der Herstellungsaufwand für das Schaltgerät gering gehalten wird, da dieselben Gehäuse und auch dieselben Spritzgussformen verwendet werden können, wie bei Schaltgeräten mit Schraubklemmen und auch die Klemmen bis auf die verwendeten Federn mit den Schraubklemmen ident sein können. Dies spart Teile und Herstellungskosten und ermöglicht es eine flexible Fertigung aufzubauen, welche schnell und unkompliziert auf geänderte Kundenanforderungen reagieren kann.

Eine Variante der Erfindung kann darin bestehen, dass im Bereich des ersten Kastenbereichs ein, dem Klemmbereich abgewandter, Lappen an dem Kasten angeordnet ist, insbesondere einstückig angeformt ist. Dadurch wird das Einführen eines Leiters in den Raum hinter der Anschlussklemme verhindert.

In Weiterbildung der Erfindung kann vorgesehen sein, dass das Klemmelement als im Wesentlichen rechteckiger Rahmen ausgebildet ist, und der zweite Kastenbereich zwischen einem, die erste und zweite Klemmelementseite umfassenden, ersten Rahmenbereich und einem, zu diesem im Wesentlichen parallelen, zweiten Rahmenbereich angeordnet ist. Dadurch kann die Feder geschützt werden und eine Beschädigung der Anschlussklemme vor allem im Bereich der Fertigung verhindert werden. Dadurch kann ebenfalls eine bereits als Schraubklemme vorhandene Anschlussklemme verwendet werden, mit den bereits beschriebenen Vorteilen, wie etwa die Verwendung identer Gehäuse bzw. Spritzgussformen, sowie bis auf die Feder identer Anschlussklemmen. Dadurch wird die Flexibilität erhöht und die Fertigungskosten sowie die Lagerhaltungskosten reduziert.

Eine andere mögliche Ausführungsform kann darin bestehen, dass der zweite Rahmenbereich wenigstens eine Ausnehmung aufweist. Eine derartige Ausnehmung kann bereits bei einer, auch als Schraubklemme verwendbaren, Anschlussklemme vorhanden sein, und für eine Interaktion mit dem Verschlussstück verwendet werden.

In diesem Zusammenhang kann in Weiterführung der Erfindung vorgesehen sein, dass das Verschlussstück einen Klemmfortsatz aufweist, welcher durch die Ausnehmung hindurch auf den, wenigstens im Bereich des Klemmfortsatzes ausnehmungsfreien, zweiten Kastenbereich drückt, wobei der Klemmbereich aufgedrückt wird. Dadurch kann gewährleistet werden, dass das der Klemmbereich einen gewissen Bereich geöffnet ist, wodurch das Einführen eines Anschlussleiters wesentlich vereinfacht wird, bzw. die dafür notwendigen Drücke verringert werden.

Die Erfindung wird unter Bezugnahme auf die beigeschlossenen Zeichnungen, in welchen besonders bevorzugte Ausführungsformen beispielhaft dargestellt sind, näher beschrieben.

Dabei zeigt:
Fig. 1 eine erste Ausführungsform einer Anschlussklemme für ein Schaltgerät;
Fig. 2 eine zweite Ausführungsform einer Anschlussklemme für ein Schaltgerät; .
Fig. 3 die Ausführungsformen gemäß den Fig. 1 und 2 mit zwei Sammelschienen;
Fig. 4 die Ausführungsformen gemäß den Fig. 1 und 2 mit Anschlussleitem in den Klemmbereichen;
Fig. 5 ein Teil eines erfindungsgemäßen Schaltgeräts mit einer zweiten Ausführungsform einer Anschlussklemme in teilweise geschnittener Darstellung;
Fig. 6 ein Teil eines erfindungsgemäßen Schaltgeräts mit einer ersten Ausführungsform einer Anschlussklemme in teilweise geschnittener Darstellung;
Fig. 7 ein Teil eines erfindungsgemäßen Schaltgeräts im Grundriss;
Fig. 8 ein Teil eines Schaltgeräts gemäß Fig. 7 im Seitenriss in teilweise geschnittener Darstellung;
Fig. 9 ein Schaltgerät gemäß Fig. 7 im Aufriss;
Fig. 10 ein Schaltgerät gemäß Fig. 7 in axonometrischer Darstellung mit abgehobener oberer Gehäusehälfte;
Fig. 11 die obere Gehäusehälfte eines Schaltgeräts gemäß Fig. 10; und
Fig. 12 zwei axonometrische Ansichten eines erfindungsgemäßen Verschlussstückes.

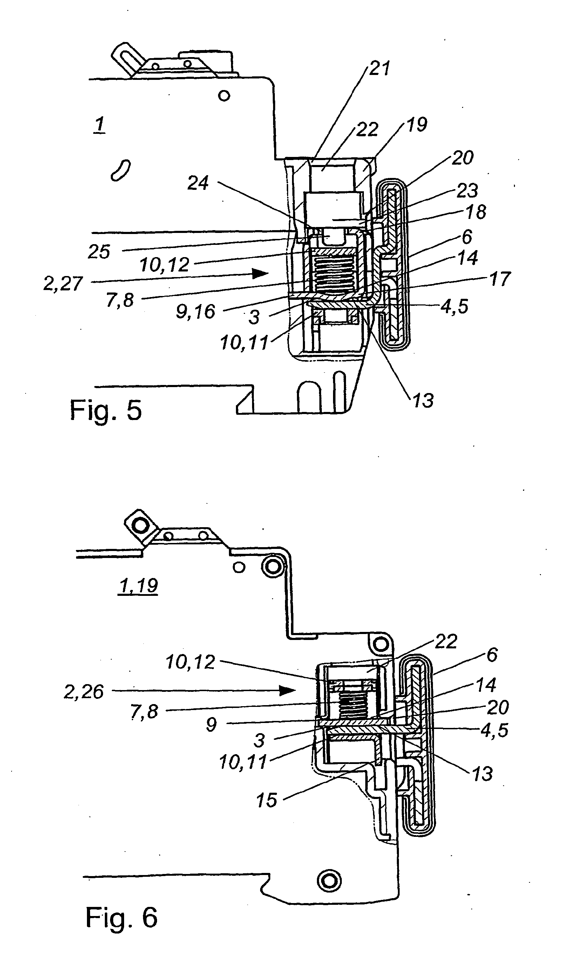

Die Fig. 5 bis 11 zeigen ein Schaltgerät 1 bzw. Teile eines solchen Schaltgeräts 1, vorzugsweise ein Schutzschalter, insbesondere ein Fehlerstromschutzschalter und/oder ein Leitungsschutzschalter, umfassend ein Gehäuse 19 mit wenigstens einer Klemmöffnung 20 und/oder wenigstens einer Klemmschrauböffnung 21, wobei in der Klemmschrauböffnung 21 ein, die Klemmschrauböffnung 21 wenigstens bereichsweise ausfüllendes, Verschlussstück 22, vorzugsweise umfassend Isolierstoff, angeordnet ist.

Um bei erfindungsgemäßen Schaltgeräten 1 bereits vorhandene Gehäuse 19, welche für Schraubanschlussklemmen vorgesehen sind, weiterhin verwenden zu_ können, ist bei derartigen Schaltgeräten 1 mit Gehäusen 19, welche Klemmschrauböffnungen 21, sowie Klemmöffnungen 20, insbesondere zusätzliche Klemmöffnungen 20 zum Klemmen sog. Kabelschuhe, aufweisen, vorgesehen, dass in der Klemmschrauböffnung 21 ein Verschlussstück 22, vorzugsweise umfassend Isolierstoff, angeordnet ist. Dadurch können dieselben Gehäuse 19 wie bisher verwendet werden, ohne dass die Gefahr eines unbefugten Zugriffs durch eine nicht mehr notwendige Klemmschrauböffnung 21 besteht. Dadurch können wesentliche Kosten eingespart werden, da keine neue Spritzgussform für ein neues Gehäuse 19 notwendig ist.

Bei erfindungsgemäßen Schaltgeräten 1 kann es sich um jede Art Schaltgerät 1 handeln. Bevorzugt sind Schutzschalter, insbesondere Fehlerstromschutzschalter und/oder Leitungsschutzschalter vorgesehen.

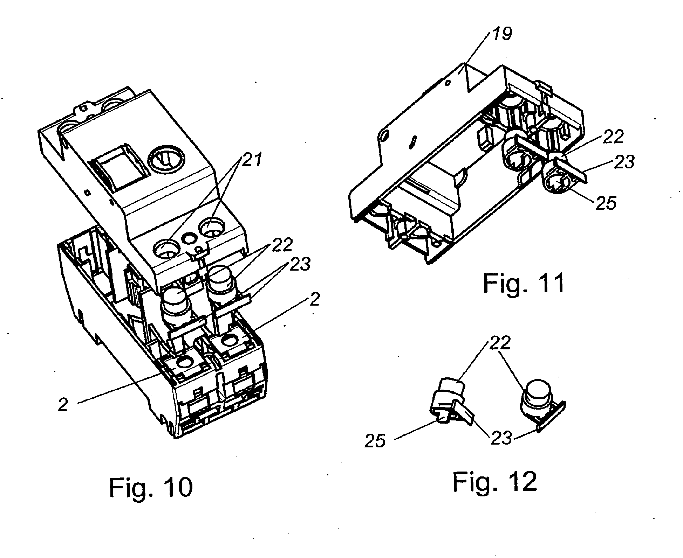

Die Fig. 5 bis 8 zeigen Schaltgeräte 1 mit einer bevorzugten Ausführung eines Verschlussstückes 22. Die Fig. 10 und 11 zeigen axonometrische Darstellungen eines Schaltgeräts 1 bzw. eines Gehäuseteils 19 eines Schaltgeräts 1 mit der bevorzugten Ausführungsform des Verschlussstückes 22. Fig. 12 zeigt zwei axonometrische Darstellungen der bevorzugten Ausführungsform des Verschlussstückes 22. Es kann bevorzugt vorgesehen sein, dass das Verschlussstück 22 derart geformt ist, dass es den durch die nicht vorhandene Klemmschraube freien Platz bzw. Raum auszufüllen imstande ist.

Insbesondere kann vorgesehen sein, dass das Verschlussstück 22 einen Klemmöffnungsfortsatz 23 aufweist, welcher die Klemmöffnung 20 bereichsweise ausfüllt. Dadurch können unnötige Klemmöffnungen 20, welche etwa für Kabelschuhe vorgesehen waren, welche zwischen dem Kopf einer Klemmschraube und dem Klemmelement 9 geklemmt werden sollten, vollständig verschlossen werden, wodurch ein Zugriff, bzw. das Eindringen von Fremdkörpern und Schmutz verhindert wird. Dadurch kann die Sicherheit gegen Berühren stromführender Bauteile erhöht werden, das Eindringen von Schmutz, Flüssigkeiten bzw. Kleinlebewesen in das Schaltgerät verhindert bzw. erschwert werden, und die Luft- bzw. Kriechstromstrecken zwischen benachbarten Schaltgeräten 1 erhöht werden. Ein derart gebildetes Schaltgerät 1 weist daher eine besonders hohe Betriebssicherheit und eine hohe Lebensdauer auf. Insbesondere im US-amerikanischen Raum sind spezielle Sicherungskästen für die Anordnung von Schutzschaltern unüblich. Ein entsprechender Schutzschalter ist daher in einer derartigen Anordnung vielfältigen Umweltbelastungen ausgesetzt, etwa ist es speziell im US-amerikanischen Raum nicht unüblich, Schutzschalter beim Streichen der diese umgebenden Gebäudewand mit zu übermahlen, was durch in das Schaltgerät 1 eindringende Farbe zur vollständigen Funktionsuntüchtigkeit des Schutzschalters führen kann, was durch das Vorsehen eines entsprechenden Verschlussstücks 22 mit einem Klemmöffnungsfortsatz 23 wirkungsvoll und kostenschonend verhindert werden kann, wodurch die Sicherheit einer betreffenden elektrischen Anlage über lange Zeit auch unter schwierigen Umweltbedingungen gewährleistet werden kann.

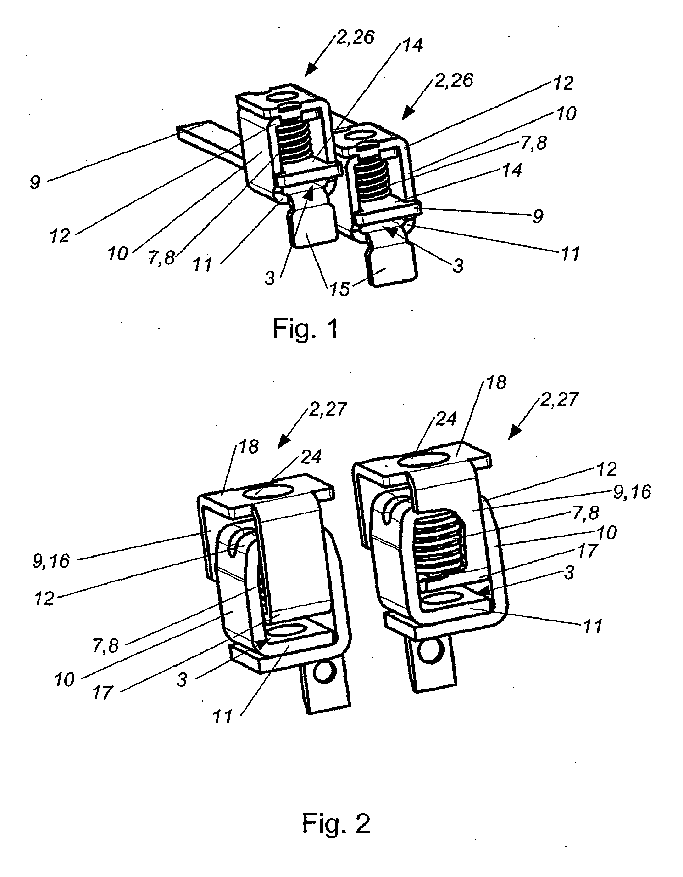

Die Fig. 1 bis 9 zeigen unterschiedliche Ausführungsformen, Details bzw. Teile eines Schaltgeräts 1, vorzugsweise Schutzschalter, insbesondere Fehlerstromschutzschalter und/oder Leitungsschutzschalter, mit wenigstens einer Anschlussklemme 2 mit einem Klemmbereich 3 zur Aufnahme wenigstens eines Anschlussleiters 4, vorzugsweise mit rechteckigem Querschnitt, insbesondere eines Kontakts 5 einer Sammelschiene 6, wobei die Anschlussklemme 2 wenigstens eine Feder 7, zum Aufbringen eines in Richtung einer Schließstellung des Klemmbereichs 3 wirkenden Kontaktdruckes, umfasst.

Durch eine derartige Anschlussklemme können Anschlussleiter 4, insbesondere Sammelschiene 6 bzw. deren Kontakte 5, ohne die Verwendung von Werkzeug in den Anschlussklemmen 2 des Schaltgeräts 1 sicher und kontaktfest angeordnet bzw. fixiert werden. Dadurch ist eine schnelle und unkomplizierte Installation insbesondere von Schaltgeräten 1, welche auf einer Tragschiene angeordnet sind möglich.

Bei der Feder 7 zum Aufbringen des Kontaktdruckes kann es sich um jede Art Feder 7 handeln, wie etwa Blattfedern, Tellerfedern und/oder Schraubfedem 8, in jeder Ausführung bzw. in Kombination miteinander, sowohl Zug- als auch als Druckfedern. Besonders bevorzugt ist der Einsatz sog. Schraubdruckfedern.

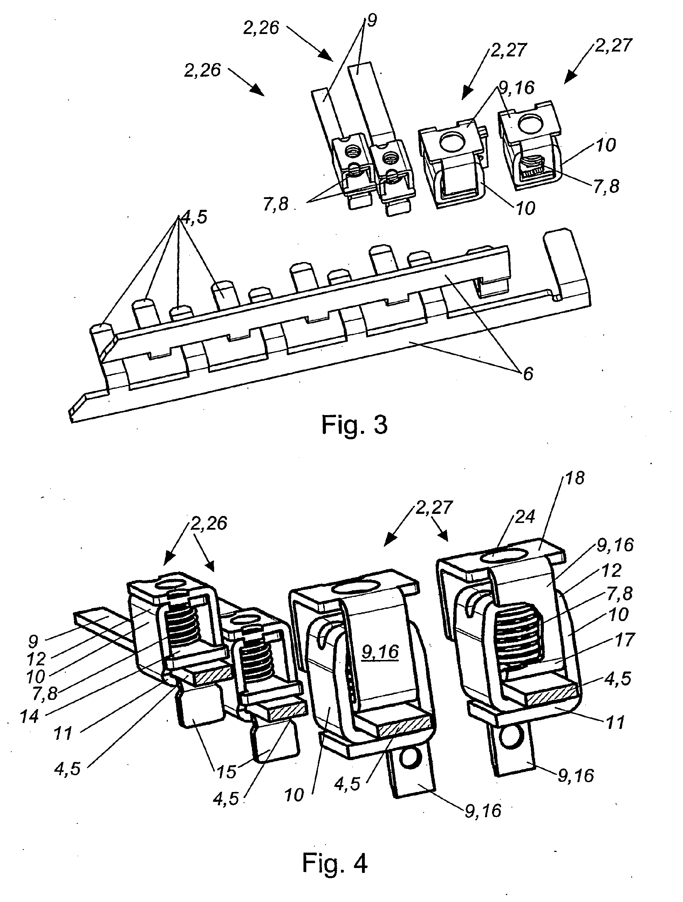

Erfindungsgemäße Schaltgeräte 1 können zum Einsatz jeder Art Anschlussleiter 4 vorgesehen sein, etwa Runddrähte, Flachdrähte und/oder Stecker. Insbesondere ist der Einsatz zusammen mit sog. Sammelschienen 6 vorgesehen. Diese Sammelschienen 6, wie beispielhaft in Fig. 3 dargestellt, weisen in einem vorgegeben Abstand Anschlussleiter 4 auf, wobei die Abstände derart gewählt sind, dass diese mit den Abständen der Klemmöffnungen 20 bzw. Klemmbereiche 3 nebeneinander angeordneter Schaltgeräte 1 übereinstimmen, sodass eine vorgebbare Anzahl nebeneinander angeordneter Schaltgeräte 1 schnell und einfach angeschlossen werden kann. Die Anschlussleiter 4 der Sammelschienen 6 weisen in der Regel einen im Wesentlichen rechteckigen Querschnitt auf und können im Bereich der zum Einführen in die Anschlussklemme 2 vorgesehen ist angefast bzw. angeschrägt sein. Erfindungsgemäße Schaltgeräte 1 weisen bevorzugt wenigstens eine Anschlussklemme 2 auf, welche wenigstens einen Klemmbereich 3 aufweist. Insbesondere sind für jede von dem Schaltgerät 1 zu schaltende Schaltstrecke zwei Anschlussklemmen 2 vorgesehen, welche nicht notgedrungen ident ausgeführt sein müssen. Insbesondere kann vorgesehen sein, dass unterschiedliche Anschlussklemmen 2 vorgesehen sein können, etwa solche mit Klemmschrauben, sowie solche mit Federn 7, zum Aufbringen der für das Klemmen notwendigen Haltekräfte. Insbesondere kann vorgesehen sein, dass die nebeneinander angeordneten Anschlussklemmen 2 eines Schaltgeräts 1 der nebeneinander in dem Schaltgerät 1 angeordneten Schaltstrecken im Wesentlichen ident ausgeführt sein können.

Der. Klemmbereich 3 der Anschlussklemme 2 kann wenigstens einen Bereich der Feder 7 umfassen, bzw. durch wenigstens einen Bereich der Feder 7 gebildet sein. Es kann vorgesehen sein, dass die Anschlussklemme 2 eine im Wesentlichen Ω-förmig gebogene Blattfeder umfasst, wobei der Klemmbereich 3 durch die schmale Öffnung der Ω-förmig gebogenen Blattfeder gebildet ist.

Um das Einführen der Anschlussleiter 4 zu vereinfachen ist vorgesehen, dass ein anschlussleiterfreier Klemmbereich 3 wenigstens bereichsweise offen ist. Dadurch wird das Einführen eines Anschlussleiters 4 vereinfacht bzw. die für das Einführen notwendigen Kräfte verringert. Insbesondere kann vorgesehen sein, dass der Klemmbereich 3 0,1mm bis 0,5mm offen steht. Vorzugsweise kann vorgesehen sein, dass der Querschnitt der durch das Offenstehen des Klemmbereichs 3 gebildeten Öffnung etwa 10% bis 60% des Querschnitts des Anschlussleiters 4 beträgt, welcher zur Verwendung mit dem jeweiligen Schaltgerät 1 vorgesehen ist. Durch die für jedes Schaltgerät 1 verfügbaren Angaben hinsichtlich der zu schaltenden Ströme kann ein Verhältnis zum Leiterquerschnitt hergestellt werden, welcher für die entsprechenden Ströme notwenig ist.

Bevorzugt ist vorgesehen, dass die Feder 7 lediglich den in Richtung einer Schließstellung des Klemmbereichs 3 wirkenden Kontaktdruck aufbringt. Bei der ersten und zweiten besonders bevorzugten Ausführungsform einer Anschlussklemme 2, 26, 27, wie in den Fig. 1 bis 4 dargestellt, sind ein Klemmelement 9 und ein beweglicher Kasten 10 vorgesehen, welche den Klemmbereich 3 ausbilden. Sowohl die erste bevorzugte Ausführungsform einer Anschlussklemme 2, 26 gemäß Fig. 1, als auch die zweite bevorzugte Ausführungsform einer Anschlussklemme 2, 27 gemäß Fig. 2 haben als Basis herkömmliche Schraubanschlussklemmen, welche auch unter den Bezeichnungen Käfigzugklemme bzw. Liftklemme bekannt sind. Die Feder 7 übernimmt bei der bevorzugten ersten und zweiten bevorzugten Ausführungsform einer Anschlussklemme 2, 26, 27 lediglich die, ansonst einer Klemmschraube zufallende Aufgabe den nötigen Kontaktdruck bereitzustellen.

Die bevorzugte erste und zweite Ausführungsform einer Anschlussklemme 2, 26, 27 weist ein im Schaltgerät 1 feststehendes Klemmelement 9 und einen im Wesentlichen rechteckigen Kasten 10 auf, wobei das Klemmelement 9 zwischen einem ersten Kastenbereich 11 und einem zweiten Kastenbereich 12 des Kastens 10 angeordnet ist, und wobei der Klemmbereich 3 vom ersten Kastenbereich 11 und einer ersten Klemmelementseite 13 begrenzt ist, wobei die Feder 7 zwischen dem zweiten Kastenbereich 12 und einer, der ersten Klemmelementseite 13 gegenüber angeordneten, zweiten Klemmelementseite 14 angeordnet ist.

Das Klemmelement 9 ist bei der ersten bevorzugten Ausführungsform einer Anschlussklemme 2, 26 als im Wesentlichen gerader Blechstreifen, insbesondere umfassend Stahl, Kupfer und/oder Kupferlegierungen, insbesondere Messing, ausgeführt, welcher in dem Schaltgerät 1, unbeweglich, insbesondere im Bereich eines Klemmentunnels, angeordnet ist, etwa durch Einklemmen zwischen Anformungen an die Klemmentunnelinnenwandung.

Der Kasten 10 ist ein vorzugsweise, und wie dargestellt, im Wesentlichen rechteckiger Bauteil, der vorzugsweise aus einem viermal um etwa 90° abgewinkelten Metallstreifen, insbesondere Streifen umfassend Stahl, Kupfer und/oder Kupferlegierungen, etwa Messing, besteht. Bevorzugt weist der Kasten 10 einen überlappenden Bereich auf. Es kann vorgesehen sein, dass der Kasten 10 zur Bildung einer verwindungssteifen Einheit, insbesondere im überlappenden Bereich, verbunden, insbesondere verschweißt oder vernietet, ist.

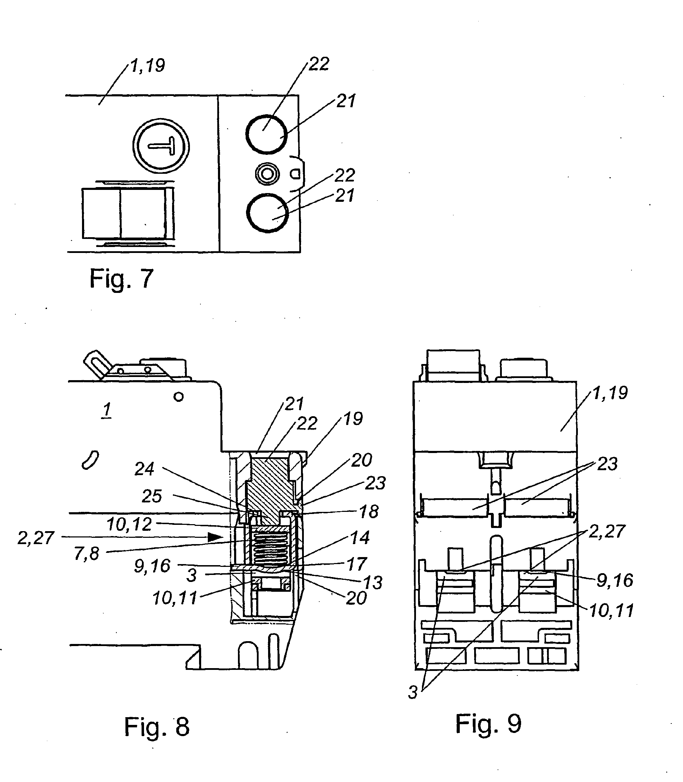

Es kann vorgesehen sein, wie bei der zweiten bevorzugten Ausführungsform einer Anschlussklemme 2, 27, dass das Klemmelement 9 als im Wesentlichen rechteckiger Rahmen 16 ausgebildet ist, und der zweite Kastenbereich 12 zwischen einem, die erste und zweite Klemmelementseite 13, 14 umfassenden, ersten Rahmenbereich 17 und einem, zu diesem im Wesentlichen parallelen, zweiten Rahmenbereich 18 angeordnet ist. Wie in den Fig. 2 bis 4, aber vor allem den Fig. 5 und 8 dargestellt, handelt es sich bei dem Rahmen 16 um einen Streifen, welcher vorzugsweise dreimal um im Wesentlichen 90° abgewinkelt ist. Das Klemmelement 9 ist dabei verlängert und schlingt sich um den beweglichen Kasten 10, wobei ein vorzugsweise geschlossener Rahmen 16 von im Wesentlichen rechteckigem Querschnitt gebildet wird. Der Rahmen 16 ist gegenüber dem Kasten 10 um 90° gedreht und in diesen eingehängt. Wie bei der ersten Ausführungsform einer Anschlussklemme 2, 26 ist auch bei dieser Ausführungsform der Klemmbereich 3 vom ersten Kastenbereich 11 und einer ersten Klemmelementseite 13 begrenzt bzw. berandet, wobei die erste Klemmelementseite 13 Teil des ersten Rahmenbereichs 17 ist.

Um ein Einführen von Anschlussleitem 4 und/oder Werkzeugen in einem Raum hinter der Anschlussklemme 2 zu verhindern kann vorgesehen sein, dass im Bereich des ersten Kastenbereichs 11 ein, dem Klemmbereich 3 abgewandter, Lappen 15 an dem Kasten 10 angeordnet ist, insbesondere einstückig angeformt ist.

Wie bereits dargelegt ist es vorteilhaft, wenn der Klemmbereich 3 der Anschlussklemme 2 nicht vollständig geschlossen ist, wodurch das Einführen eines Anschlussleiters 4 vereinfacht wird.

Daher ist vorgesehen, dass das Verschlussstück 22 einen Klemmfortsatz 25 aufweist, welcher auf wenigsten einen Bereich der Anschlussklemme 2 wirkt, wobei ein anschlussleiterfreier Klemmbereich 3 durch die Wirkung des Klemmfortsatzes 25 auf die Anschlussklemme 2 wenigstens bereichsweise offen ist.

Bei Schaltgeräten 1, welche eine Anschlussklemme 2 aufweisen, bei welcher der zweite Rahmenbereich 18 wenigstens eine Ausnehmung 24 aufweist, kann es vorgesehen sein, dass das Verschlussstück 22 einen Klemmfortsatz 25 aufweist, welcher durch die Ausnehmung 24 hindurch auf den, wenigstens im Bereich des Klemmfortsatzes 25 ausnehmungsfreien, zweiten Kastenbereich 12 drückt, wobei der Klemmbereich 3 aufgedrückt wird. Fig. 8 zeigt eine derartige Anordnung, bei der der Klemmfortsatz 25 durch die Ausnehmung 24 hindurch gegen den Kasten 10 drückt, und so den Klemmbereich 3 öffnet, wodurch das Einführen eines Anschlussleiters 4 vereinfacht wird.

## Patentansprüche

1. Schaltgerät (1), vorzugsweise Schutzscbalter, insbesondere Fehlerstroraschutzschalter und/oder Leitungsschutzschalter, umfassend ein Gehäuse (19) mit wenigstens einer Klemmöffnung (20) und/oder wenigstens einer Klemmschrauböffnung (21), und mit wenigstens einer Anschlussklemme (2) mit einem Klemmbereich (3) zur Aufnahme wenigstens eines Ansehlussleiters (4), vorzugsweise mit rechteckigem Querschnitt, insbesondere eines Kontakts (5) einer Sammelschiene (6), wobei in der Klemmschrauböffnung (21) ein, die Klemmschrauböffnung (21) wenigstens bereichsweise ausfüllendes, sowie verdrehgesichertes und/oder in Richtung der Schließstellung des Klemmbereichs (3) verschiebefestes, Verschlussstück (22), vorzugsweise umfassend Isolierstoff, angeordnet ist, **dadurch gekennzeichnet dass** das Verschlussstück (22) einen Klemmfortsatz (25) aufweist, welcher auf wenigstens einen Bereich der Anschlussklemme (2) wirkt, wobei ein anschlussleiterfreier Klemmbereich (3) durch die Wirkung des Klemmfortsatzes (25) auf die Anschlussklemme (2) wenigstens bereichsweise offen ist.

2. Schaltgerät (1) nach Anspruch 1, **dadurch gekennzeichnet, dass** das Verschlussstück (22) wenigstens einen Klemmöffnungsfortsatz (23) aufweist, welcher die wenigstens eine Klemmöffnung (20) wenigstens bereichsweise ausfüllt.

3. Schaltgerät (1) nach Anspruch 1 oder 2, **dadurch gekennzeichnet, dass** die Anschlussklemme (2) wenigstens eine Feder (7), zum Ausbringen eines in Richtung der Schließstellung des Klemmbereichs (3) wirkenden Kontaktdruckes, umfasst.

4. Schaltgerät (1) nach Anspruch 3, **dadurch gekennzeichnet, dass** die Feder (7) als Schraubfeder (8) ausgebildet ist.

5. Schaltgerät (1) nach einem der Ansprüche 3 oder 4, wobei die Auschlussklemme (2) ein im Schaltgerät (1) feststehendes Klemmelement (9) und einen im Wesentlichen rechteckigen Kasten (10) umfasst, wobei das Klemmelement (9) zwischen einem ersten Kastenbereich (11) und einem zweiten Kastenbereich (12) des Kastens (10) angeordnet ist, und wobei der Klemmbereich (3) vom ersten Kastenbereich (11) und einer ersten Klemmelementseite (13) begrenzt ist, **dadurch gekennzeichnet, dass** die Feder (7) zwischen dem zweiten Kastenbereich (12) und einer, der ersten Klemmelementseite (13) gegenüber angeordneten, zweiten Klemmelementseite (14) angeordnet ist.

6. Schaltgerät (1) nach Anspruch 5, **dadurch gekennzeichnet, dass** im Bereich des ersten Kastenbereichs (11) ein, dem Klemmbereich (3) abgewandter, Lappen (15) an dem Kasten (10) angeordnet ist, insbesondere einstückig angeformt ist

7. Schaltgerät (1) nach Anspruch 5 oder 6, **dadurch gekennzeichnet, dass** das Klemmelement (9) als im Wesentlichen rechteckiger Rahmen (16) ausgebildet ist, und der zweite Kastenbereich (12) zwischen einem, die erste und zweite Klemmelementseite (13, 14) umfassenden, ersten Rahmenbereich (17) und einem, zu diesem im Wesentlichen parallelen, zweiten Rahmenbereich (18) angeordnet ist.

8. Schaltgerät (1) nach Anspruch 7, **dadurch gekennzeichnet, dass** der zweite Rahmenbereich (18) wenigstens eine Ausnehmung (24) aufweist.

9. Schaltgerät (1) nach Anspruch 8, **dadurch gekennzeichnet, dass** das Verschlussstück (22) einen Klemmfortsatz (25) aufweist, welcher durch die Ausnehmung (24) hindurch auf den, wenigstens im Bereich des Klemmfortsatzes (25) ausnehmungsfreien, zweiten Kastenbereich (12) drückt, wobei der Klemmbereich (3) aufgedrückt wird.

## Claims

1. A switchgear (1), preferably a circuit breaker, especially a residual-current circuit breaker and/or a miniature circuit breaker, comprising a housing (19) with at least one clamping opening (20) and/or at least one clamping screw opening (21), and at least one connecting terminal (2) with a clamping region (3) for receiving at least one terminal lead (4), preferably with a rectangular cross section, especially a contact (5) of a busbar (6), with a locking element (22), preferably comprising insulating material, being arranged in the clamping screw opening (21), which locking element fills the clamping screw opening (21) at least in part and is secured against twisting and/or is fixed against displacement in the direction of the closed position of the clamping region (3), **characterized in that** the locking element (22) comprises a clamping projection (25) which acts upon at least one region of the connecting terminal (2), with a clamping region which is free from a terminal lead being open at least in part by the effect of the clamping projection (25) on the connecting terminal (2).

2. A switchgear (1) according to claim 1, **characterized in that** the locking element (22) comprises at least one clamping opening projection (23) which at least partly fills the at least one clamping opening (20).

3. A switchgear (1) according to claim 1 or 2, **characterized in that** the connecting terminal (2) comprises at least one spring (7) for exerting a contact pressure acting in the direction of the closed position of the clamping region (3).

4. A switchgear according to claim 3, **characterized in that** the spring (7) is arranged as a spring coil (8).

5. A switchgear (1) according to one of the claims 3 or 4, with the connecting terminal (2) comprising a clamping element (9) fixed in the switchgear (1) and a substantially rectangular box (10), with the clamping element (9) being arranged between a first box area (11) and a second box area (12) of the box (10), and with the clamping region (3) being delimited by a first box region (11) and a first clamping element side (13), **characterized in that** that* the spring (7) is arranged between the second box area (12) and a second clamping element side (14) which is arranged opposite of the first clamping element side (13).

6. A switchgear (1) according to claim 5, **characterized in that** in the region of the first box area (11) a lug (15) averted from the clamping region (3) is arranged on the box (10), especially integrally formed on the same.

7. A switchgear (1) according to claim 5 or 6, **characterized in that** the clamping element (9) is arranged as a substantially rectangular frame (16) and the second box area (12) is arranged between a first frame area (17) comprising the first and second clamping element side (13, 14) and a second frame area (18) which is substantially parallel to the same.

8. A switchgear (1) according to claim 7, **characterized in that** the second frame area (18) comprises at least one recess (24).

9. A switchgear (1) according to claim 8, **characterized in that** the locking element (22) comprises a clamping projection (25) which presses through the recess (24) on the second box area (12) which is free from a recess at least in the area of the clamping projection (25), with the clamping region (3) being pressed open.

## Revendications

1. Appareil de commutation (1), de préférence disjoncteur de protection, en particulier disjoncteur à courant de fuite et/ou disjoncteur de protection de ligne, comprenant un logement (19) avec au moins une ouverture de borne (20) et/ou au moins une ouverture de vis de borne (21) et avec au moins une borne de raccordement (2) avec une zone de serrage (3) destinée à recevoir au moins un conducteur de raccordement (4), de préférence de section carrée, en particulier celui d'un contact (5) d'une barre collectrice (6), l'ouverture de vis de borne (21) contenant un obturateur (22) remplissant au moins en en partie l'ouverture de vis de borne (21) et fixé en rotation et/ou en translation dans le sens de la position de fermeture de la zone de serrage (3), comprenant de préférence un isolant, **caractérisé en ce que** l'obturateur (22) présente une saillie de serrage (25) qui agit sur au moins une zone de la borne de raccordement (2), une zone de serrage (3) sans conducteur de raccordement étant au moins partiellement ouverte par l'action de la saillie de serrage (25) sur la borne de raccordement (2).

2. Appareil de commutation (1) selon la revendication 1, **caractérisé en ce que** l'obturateur (22) présente au moins une saillie dans l'ouverture de borne (23) qui remplit au moins partiellement une ouverture de borne (20).

3. Appareil de commutation (1) selon la revendication 1 ou 2, **caractérisé en ce que** la borne de raccordement (2) présente au moins un ressort (7) destiné à exercer une pression de contact agissant dans la direction de la position de fermeture de la partie de serrage (3).

4. Appareil de commutation (1) selon la revendication 3, **caractérisé en ce que** le ressort (7) est conformé comme un ressort hélicoïdal (8).

5. Appareil de commutation (1) selon l'une des revendications 3 ou 4, dans lequel la borne de raccordement (2) comprend un élément de serrage (9) fixe dans l'appareil de commutation (1) et un boîtier (10) sensiblement rectangulaire, l'élément de serrage (9) étant disposé entre une première partie de boîtier (11) et une deuxième partie de boîtier (12) du boîtier (10) et la partie de serrage (3) étant délimitée par la première partie de boîtier (11) et un premier côté de l'élément de serrage (13), **caractérisé en ce que** le ressort (7) est disposé entre la deuxième partie de boîtier (12) et un deuxième côté d'élément de serrage (14) disposé en face du premier côté d'élément de serrage (13).

6. Appareil de commutation (1) selon la revendication 5, **caractérisé en ce qu'**une patte (15) dirigée à l'opposé de la partie de serrage (3) est disposée sur le boîtier (10), en particulier moulée d'un seul tenant, au niveau de la première partie de boîtier (11).

7. Appareil de commutation (1) selon la revendication 5 ou 6, **caractérisé en ce que** l'élément de serrage (9) est conformé comme un cadre (16) sensiblement rectangulaire, et la deuxième partie de boîtier (12) est disposée entre une première partie de cadre (17) renfermant le premier côté d'élément de serrage et le deuxième (13, 14) et une deuxième partie de cadre (18) sensiblement parallèle à celle-ci.

8. Appareil de commutation (1) selon la revendication 7, **caractérisé en ce que** la deuxième partie de cadre (18) présente au moins une ouverture (24).

9. Appareil de commutation (1) selon la revendication 8, **caractérisé en ce que** l'obturateur (22) présente une saillie de serrage (25) qui appuie à travers l'ouverture (24) sur la deuxième partie de boîtier (12) qui ne présente pas d'ouverture au moins au niveau de la saillie de serrage (25), en ouvrant ainsi la zone de serrage (3).
